# EUROPÄISCHE PATENTANMELDUNG

(11) **EP 1 411 218 A2**
(43) Veröffentlichungstag der Anmeldung: **21.04.2004**
(21) Anmeldenummer: 03090345.4
(22) Anmeldetag: 13.10.2003
(51) Int. Cl.: F01N 7/14, F01N 1/24, F16L 59/14, F02B 77/11, C23C 28/00

(54) **Verfahren zur Herstellung isolierter Körper**

(30) Priorität: 15.10.2002 DE 10248781; 15.10.2002 DE 20216080 U
(71) Anmelder: ATJ Autotechnik Gmbh, 08349 Johanngeorgenstadt (DE)
(72) Erfinder: Die Erfindernennung liegt noch nicht vor
(74) Vertreter: Hengelhaupt, Jürgen D., Dipl.-Ing.

(57) **Zusammenfassung**

Die Erfindung beschreibt ein Verfahren zur Herstellung isolierter Körper, welche mit einer Temperatur- und/oder Schallisolation versehen werden und auf die Oberfläche des Körpers eine Schicht aus Isoliermaterial (3) durch Wickeln aufgebracht und auf die Oberfläche des aufgewickelten Isoliermaterials (3) eine Metallschicht (4) aufgebracht wird.

Der isolierte Körper besteht somit aus einer einen Hohlraum (1) umschließenden Metallhülle (2), einer auf der Metallhülle (2) aufgewickelten Isolierschicht (3) sowie mindestens einer die Isolierschicht (3) bedeckenden Metallschicht (4).

## Beschreibung

Die Erfindung betrifft ein Verfahren zur Herstellung isolierter Körper sowie den Aufbau von nach diesem Verfahren hergestellten Körpern.
Ein spezielles Anwendungsgebiet der Erfindung sind Auspuffanlagen für Kraftfahrzeuge, insbesondere die Krümmer und Rohre sowie Schalldämpfer dieser Auspuffanlagen. Ein weiteres Anwendungsgebiet der Erfindung sind Rohre, wie sie beispielsweise in der Lebensmittelindustrie oder der Gastronomie eingesetzt werden und bei welchen eine Temperatur- oder Schallisolierung realisiert werden soll bei hohen Anforderungen an die Ansichtsgüte.

In der Kraftfahrzeugindustrie sind Auspuffanlagen in vielfältiger Ausführungsform bekannt. Der normale Auspuffkrümmer besteht oftmals aus Baustahl und wird zurzeit beispielsweise mit Präge-Blechmänteln gegen Wärmeabstrahlung geschützt. Dies wird zunehmend deshalb erforderlich, da im Automobilbau immer mehr wärmeempfindliche Kunststoffteile eingebaut werden und diese ohne eine wirksame Wärmeisolation zerstört werden könnten.

Hochleistungskrümmer werden dagegen gasstromoptimiert aus Edelstahl gefertigt. Ihre Wärmeabstrahlung stellt ein bislang ungelöstes Problem dar, da durch die optimierte Form Abstände zu anderen Konstruktionsteilen beachtet werden müssen.
Die Wärmeabstrahlung kann durch Isolierung der Krümmer reduziert werden, wobei aber die äußere Optik des Edelstahls durch das Isoliermaterial verloren geht. Dies jedoch wird vom Kunden häufig nicht akzeptiert.

Der Erfindung liegt daher die Aufgabe zugrunde, ein Verfahren und einen isolierten Körper zu schaffen, mit welchen eine gute Isolation gegen Wärme und Schall bei einer hohen Ansichtsgüte gewährleistet wird, eine lange Lebensdauer garantiert ist und die Herstellung einfach und preiswert realisiert werden kann.

Diese Aufgabe wird erfindungsgemäß gelöst durch die Merk male im kennzeichnenden Teil der Ansprüche 1 und 8 im Zusammenwirken mit den Merkmalen im jeweiligen Oberbegriff. Zweckmäßige Ausgestaltungen der Erfindung sind in den Unteransprüchen enthalten.

Ein besonderer Vorteil der Erfindung besteht darin, dass die isolierten Körper eine hohe Ansichtsgüte aufweisen und optisch den Eindruck einer massiven Metalloberfläche vermitteln, was dadurch erreicht wird, dass auf die Oberfläche des Körpers eine Schicht aus Isoliermaterial durch Wickeln aufgebracht und auf die Oberfläche des aufgewickelten Isoliermaterials eine Metallschicht aufgebracht wird.
Der Isolierte Körper ist einfach und preiswert herstellbar und besteht lediglich aus einer einen Hohlraum umschließenden Metallhülle, einer auf der Metallhülle aufgewickelten Isolierschicht sowie mindestens einer die Isolierschicht bedeckenden Metallschicht.

Bei der Herstellung der isolierten Körper wird erfindungsgemäß ein geeignetes Isoliermaterial, beispielsweise ein Silikat oder bandförmig vorliegende Mineralwolle, um die Edelstahl oder Baustahlrohre derart gewickelt, dass eine glatte Oberläche entsteht. Diese Oberfläche aus dem Isoliermaterial wird mittels Flammen-, Elektro- oder Plasmaauftragsspritzen oder durch chemisches Abscheiden metallisiert. Dabei reicht in der Regel bereits eine Schichtdicke im Bereich von 300 bis 900 µm aus, um wärmebeständig, korrosionsfest und von gutem optischen Aussehen zu sein. Mit Mehrschichttechnologie lassen sich einfach verschiedene Farben bzw. Oberflächen erzielen. Durch Auswahl der Pulverkörnigkeit, also der Größe der Metallpulverpartikel, lässt sich die Oberflächenrauhigkeit und damit auch die Ansichtsgüte einstellen. Das Aufspritzen kann von Hand erfolgen oder auch durch Spritzroboter in einer Absaugkabine realisiert werden. Beim Einsatz von Spritzrobotern lassen sich verschiedenste Realisierungsvarianten leicht computertechnisch programmieren.

Die Erfindung soll nachstehend anhand von zumindest teilweise in den Figuren dargestellten Ausführungsbeispielen näher erläutert werden. Es zeigen:
- Fig. 1:: Eine Schnittdarstellung eines Teiles eines Auspuf fkrümmers ,
- Fig. 2:: eine Schnittdarstellung eines Schalldämpferteiles.

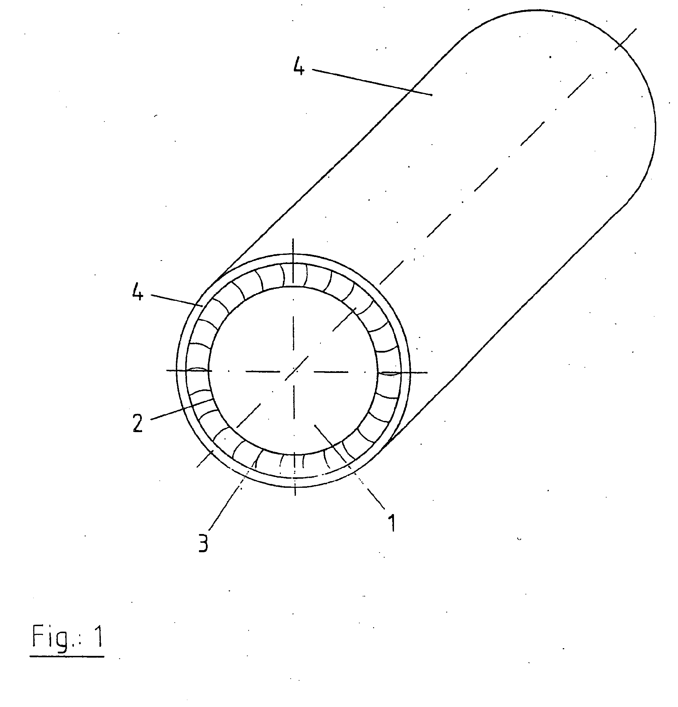

Wie aus Fig. 1 zu ersehen ist, besteht ein Rohrteil eines Krümmers einer Sportauspuffanlage aus einer einen Hohlraum 1 umschließenden Metallhülle 2, auf welche eine Isolierschicht 3 aus Isoliermaterial aufgewickelt ist. Das Isoliermaterial ist im vorliegenden Ausführungsbeispiel ein bandförmig aufbereites Silikat. Ebenso ist es möglich, bandförmig vorliegende Mineralwolle aufzuwicklen. Auf die aufgewickelte Isolierschicht 3 ist eine Metallschicht 4 aufgespritzt, welche im vorliegenden Ausführungsbeispiel eine Dicke von 500 µm aufweist. Die aufgespritzte Metallschicht 4 vermittelt den optischen Eindruck eines massiven Edelstahlrohres. Durch Einsatz von Mehrschichttechnologien ist es möglich, verschiedene Farben der Metallschicht zu realisieren. So ist es beispielsweise möglich, ins Blaue gehende Anlassfarben zu erzeugen. Die Oberflächenrauhigkeit kann durch Auswahl der Pulverkörnigkeit, also der Größe der Pulverpartikel, gezielt beeinflusst werden.
Analog dem Aufspritzen ist auch ein chemisches Abscheiden der Metallschicht möglich.

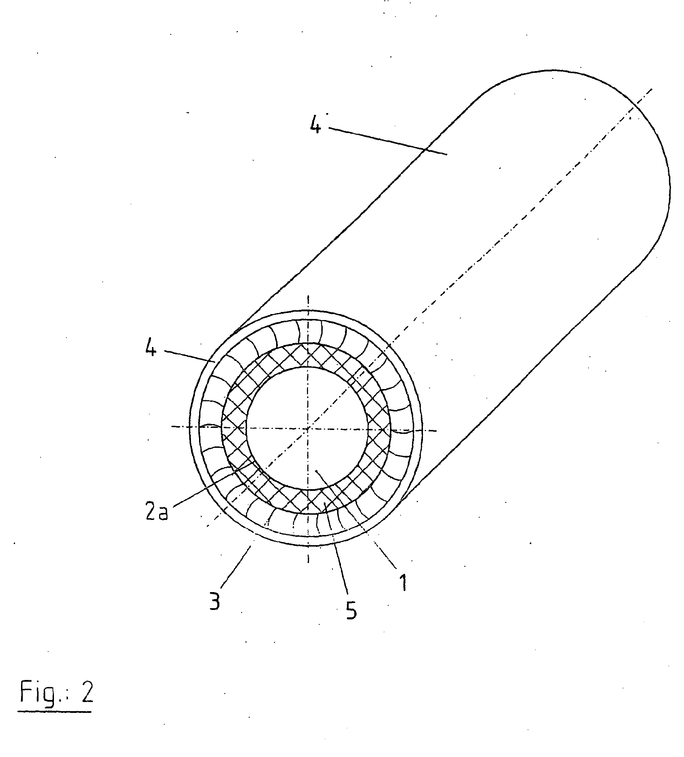

In Fig. 2 ist ein Teil eines Hochleistungs-Endschalldämpfers dargestellt, welcher neben seinen inneren schallreduzierenden Bauelementen aus einem gelochten Edelstahlrohr 2a besteht, welches mit Edelstahlwolle 5 umwickelt ist. Um die Edelstahlwolle 5 ist eine Isolierschicht 3 aus Isoliermaterial gewickelt und befestigt. Die Oberfläche des Isoliermaterials wird analog dem in Fig.1 dargestellten Ausführungsbeispiel durch Metallauftragsspritzen metallisiert.
Auch hier ergibt die Schichtdicke der Metallschicht 4 von ca. 500 µm eine komplette schützende Oberfläche mit sehr guten optischen Effekten. Die Herstellung des Endschalldämpfers wird durch diese Herstellungsmethode wesentlich vereinfacht, und zusätzlich wird das Gewicht des Endschalldämpfers erheblich reduziert.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen. So ist die Erfindung auch überall dort anwendbar, wo Rohre eingesetzt werden, welche Wärme und/oder schallisoliert werden sollen.

### Bezugszeichenliste

- 1: Hohlraum
- 2: Metallhülle
- 2a: Edelstahlrohr
- 3: Isolierschicht
- 4: Metallschicht
- 5: Edelstahlwolle

## Patentansprüche

1. Verfahren zur Herstellung isolierter Körper, wobei die Körper mit einer Temperatur- und/oder Schallisolation versehen werden,
**dadurch gekennzeichnet, dass**
auf die Oberfläche des Körpers eine Schicht aus Isoliermaterial durch Wickeln aufgebracht
und auf die Oberfläche des aufgewickelten Isoliermaterials eine Metallschicht aufgebracht wird.

2. Verfahren nach Anspruch 1,
**dadurch gekennzeichnet, dass**
die Metallschicht durch Flammenspritzen oder Elektrospritzen oder Plasmaauftragsspritzen oder chemisches Abscheiden realisiert wird.

3. Verfahren nach Anspruch 1 oder 2,
**dadurch gekennzeichnet, dass**
die Metallschicht aus einem Metallpulver erzeugt wird und durch Auswahl der Pulvermaterialen, der Pulverkörnigkeit sowie durch Modifikation des Schichtaufbaus Farben und Oberflächenbeschaffenheit gezielt eingestellt werden.

4. Verfahren nach Anspruch 1,
**dadurch gekennzeichnet, dass**
die Metallschicht mit einer Dicke im Bereich von 300 bis 900 µm, vorzugsweise 500 µm, aufgebracht wird.

5. Verfahren nach Anspruch 1,
**dadurch gekennzeichnet, dass**
die Isoliermaterialschicht aus Silikaten realisiert wird.

6. Verfahren nach Anspruch 1,
**dadurch gekennzeichnet, dass**
die Isoliermaterialschicht aus bandförmig aufbereiteter Mineralwolle realisiert wird.

7. Verfahren nach Anspruch 1,
**dadurch gekennzeichnet, dass**
zwischen der Oberfläche des Körpers und dem Isoliermaterial eine Schicht aus Edelstahlwolle aufgewickelt wird.

8. Isolierter Körper, bestehend aus einer einen Hohlraum (1) umschließenden Metallhülle (2), einer auf der Metallhülle (2) aufgewickelten Isolierschicht (3) sowie mindestens einer die Isolierschicht (3) bedeckenden Metallschicht (4).

9. Körper nach Anspruch 8,
**dadurch gekennzeichnet, dass**
die Isolierschicht (3) aus Silikaten oder bandförmig aufbereiteter Mineralwolle besteht.

10. Körper nach Anspruch 8,
**dadurch gekennzeichnet, dass**
die Metallschicht (4) eine Schichtdicke im Bereich von 300 bis 900 µm, vorzugsweise 500µm, aufweist.

11. Körper nach Anspruch 8,
**dadurch gekennzeichnet, dass**
der isolierte Körper ein Auspuffrohr oder ein Auspuffkrümmer oder ein Schalldämpfer oder ein Rohr einer Anlage ist.
